# EUROPÄISCHE PATENTANMELDUNG

(11) **EP 4 686 382 A1**
(43) Veröffentlichungstag der Anmeldung: **04.02.2026**
(21) Anmeldenummer: 25188322.9
(22) Anmeldetag: 09.07.2025
(51) Int. Cl.: A01B 59/00, A01D 34/66, F15B 15/14

(54) **ENTLASTUNGS- UND AUSHUBVORRICHTUNG FÜR EIN LANDWIRTSCHAFTLICHES ARBEITSAGGREGAT SOWIE LANDWIRTSCHAFTLICHE ARBEITSMASCHINE MIT EINER SOLCHEN ENTLASTUNGS- UND AUSHUBVORRICHTUNG**

(30) Priorität: 31.07.2024 DE 102024121812
(71) Anmelder: Pöttinger Landtechnik GmbH, 4710 Grieskirchen (AT)
(72) Erfinder: DIETACHMAIR, Andreas, 4710 Grieskirchen, (AT); GREIFENEDER, August, 4710 Grieskirchen, (AT); REININGER, Markus, 4710 Grieskirchen (AT)
(74) Vertreter: Lorenz Seidler Gossel Part. mbB

(57) **Zusammenfassung**

Die vorliegende Erfindung betrifft eine Entlastungs- und Aushubvorrichtung für ein landwirtschaftliches Arbeitsaggregat wie Mähwerk, mit einer Druckzylindereinheit, die einen Entlastungskolben, der von einer Entlastungskammer mit einem Entlastungsdruck beaufschlagbar ist, sowie einem Aushubkolben , der von einer Aushubkammer mit einem Aushubdruck beaufschlagbar ist, aufweist, wobei der Aushubkolben als Schwimm- oder Loskolben ausgebildet ist, der gegenüber dem Entlastungskolben bewegbar ist und beim Aushub des Arbeitsaggregats den Entlastungskolben antreibt, wobei die Entlastungskammer durch eine zwischen den Entlastungs- und Aushubkolben liegende Kammerwandung begrenzt ist, wobei zwischen den Entlastungs- und Aushubkolben eine Übertragerstange vorgesehen ist, die durch die genannte Kammerwandung hindurchtritt und von zumindest einem der genannten Entlastungs- und Aushubkolben lose ausgebildet ist.

## Beschreibung

Die vorliegende Erfindung betrifft allgemein landwirtschaftliche Arbeitsmaschinen mit zumindest einem Arbeitsaggregat, das von einer Entlastungs- und Aushubvorrichtung im Arbeitsbetrieb gewichtsentlastbar und im Vorgewende und/oder für den Straßentransport aushebbar ist. Die Erfindung betrifft dabei insbesondere die Entlastungs- und Aushubvorrichtung für ein solches landwirtschaftliches Arbeitsaggregat bspw. in Form eines Mähwerks, mit einer Druckzylindereinheit, die einen Entlastungskolben, der in einer Entlastungskammer mit einem Entlastungsdruck beaufschlagbar ist, sowie einen Aushubkolben, der in einer Aushubkammer mit einem Aushubdruck beaufschlagbar ist, aufweist, wobei der Aushubkolben als Los- oder Schwimmkolben ausgebildet ist, der gegenüber dem Entlastungskolben bewegbar ist und beim Aushub des Arbeitsaggregats den Entlastungskolben antreibt.

Landwirtschaftliche Arbeitsmaschinen besitzen oft höhenbeweglich gelagerte Arbeitsaggregate, die im Arbeitsbetrieb gewichtsentlastet werden, um nicht mit ihrem vollen Gewicht auf den Boden zu drücken oder in den Boden zu graben, sondern leichtfüßig über kupiertes Gelände geführt werden zu können. Zusätzlich zur Gewichtsentlastung werden solche höhenbeweglichen Arbeitsaggregate aktiv im Vorgewende oder für den Straßentransport aus der abgesenkten Arbeitsstellung in eine Vorgewende- und/oder Transportstellung ausgehoben, um im Vorgewende ohne Bodenkontakt wenden bzw. im Straßentransport die Straßenbreite einhalten zu können.

Um diese beiden Funktionen, d.h. Gewichtsentlastung im Arbeitsbetrieb und Ausheben in die Vorgewende- und/oder Transportstellung, zu erfüllen, sind diverse Systeme bekannt geworden. Beispielsweise kann die Gewichtsentlastung über mechanische Federn bewerkstelligt werden, die mit einer Druckzylindereinheit kombiniert werden können, welche das Ausheben in die Vorgewende- und/oder Transportstellung bewerkstelligt. Mechanische Entlastungsfedern sind günstig und reagieren schnell, andererseits sind sie schwer einstellbar und erfordern einen großen Bauraum, insbesondere wenn bei größeren Arbeitsbreiten hohe Entlastungskräfte aufzubringen sind.

Andererseits können zur Gewichtsentlastung auch hydropneumatische Entlastungszylinder Verwendung finden, die von einem Druckspeicher her hydraulisch oder pneumatisch druckbeaufschlagt werden können, um die gewünschte Entlastungskraft bereit zu stellen. Solche hydropneumatischen Entlastungszylinder sind hinsichtlich des Vorspanndrucks und damit der Entlastungskraft einfach einstellbar und können auch große Entlastungskräfte bereitstellen, ohne großen Bauraum zu benötigen. Andererseits sind sie regelmäßig teurer als mechanische Federn und reagieren oft auch langsamer, was der Leichtfüßigkeit des Arbeitsaggregats im gewichtsentlasteten Arbeitsbetrieb abträglich ist.

Das Ausheben in die Vorgewende- bzw. Transportstellung wird hingegen regelmäßig mit einer hydraulischen Druckzylindereinheit bewerkstelligt, die eine Aushubkammer umfasst, die vom Hydrauliksystem des Schleppers her mit Druck beaufschlagt werden kann, um den Aushubkolben in die Aushubstellung zu treiben.

Je nach Einbausituation können solche hydraulischen Druckzylindereinheiten das Arbeitsaggregat durch Ausfahren einer Kolbenstange gewichtsentlasten bzw. ausheben oder umgekehrt durch Einfahren gewichtsentlasten und ausheben.

Um für beide Funktionen, d.h. die Gewichtsentlastung einerseits und das Ausheben in die Vorgewende- bzw. Transportstellung andererseits, nur eine Druckzylindereinheit zu benötigen, wurde bereits vorgeschlagen, einen Entlastungskolben und einen Aushubkolben in einer Druckzylindereinheit zu kombinieren, wobei der Entlastungszylinder von einer Entlastungskammer her mit einem Entlastungsdruck beispielsweise aus einem Druckspeicher beaufschlagt werden kann, während der Aushubzylinder von einer Aushubkammer her mit einem für das Ausheben ausreichenden Aushubdruck beispielsweise vom Schlepper her beaufschlagt werden kann.

In solchen für beide Funktionen geeigneten Druckzylindereinheiten können die genannten Entlastungs- und Aushubkolben in verschiedener Weise miteinander kombiniert werden. Einerseits sind sogenannte Doppelzylinder bekannt, bei denen die beiden Kolben fest auf einer gemeinsamen Kolbenstange sitzen, jedoch in voneinander separierten Zylinderabschnitten untergebracht sind. Genauer gesagt kann zwischen den beiden Kolben eine stirnseitige Zylinderwandung vorgesehen sein, die zumindest eine der Druckkammern begrenzt und von der Kolbenstange durchdrungen wird, wobei die Zylinderwandung gegenüber der Kolbenstange abgedichtet ist. Hierdurch entstehen zwei separate Druckkammern, die es gestatten, einerseits den Entlastungskolben mit Entlastungsdruck beispielsweise aus einem Druckspeicher und andererseits den Aushubkolben mit Aushubdruck beispielsweise vom Schlepper her zu beaufschlagen.

In der abgesenkten Arbeitsstellung mit Entlastungsbetrieb zur Gewichtsentlastung des Arbeitsaggregats wird der Aushubkolben drucklos bzw. das Steuergerät für dessen Aushubdruckkammer auf Schwimmstellung geschaltet, sodass sich der Aushubkolben zusammen mit dem Entlastungskolben hin- und herbewegen kann, wenn das Arbeitsaggregat zur Bodenanpassung Höhenbewegungen ausführt, beispielsweise über Bodenwellen hinwegfährt. Die Entlastungskammer ist dabei mit Entlastungsdruck beaufschlagt, um die gewünschte Gewichtsentlastung herbeizuführen. Zum Ausheben wir dann der Aushebedruck in die Aushubkammer gegeben, um den Aushubkolben und damit auch den Entlastungskolben in die Aushubstellung zu treiben.

Solche Doppelzylinder leiden jedoch an einer gewissen Trägheit im Entlastungsbetrieb. Auch wenn die Aushubkammer im Entlastungsbetrieb auf Schwimmstellung geschaltet ist, kommt es durch das zu verdrängende Hydraulikfluid und die dabei zu überwindende Drosselung zu Trägheiten. Dies rührt regelmäßig daher, dass die Absenkbewegung aus der ausgehobenen Vorgewende- und/oder Transportstellung nach unten in die Arbeitsstellung gebremst werden muss, was üblicherweise durch eine Drossel erreicht wird, die den Abstrom von Druckfluid aus der Aushubkammer drosselt. Hierdurch kann zwar ein kontrolliertes Absenken aus der Vorgewendestellung und ein sanftes Anfahren der Arbeitsposition erreicht werden, allerdings ist die Bremswirkung dieser Drosselung unerwünscht, wenn im abgesenkten Arbeitsbetrieb Bodenanpassbewegungen schnell ausgeführt werden sollen, da der Aushubkolben ja auch in der abgesenkten Arbeitsposition bei Bewegungen des Entlastungszylinders mitbewegt wird.

Es wurde insofern bereits vorgeschlagen, den Aushubkolben vom Entlastungskolben abzukoppeln und als Schwimmkolben auszubilden. Die größenveränderbare Kammer zwischen Entlastungskolben und Schwimmkolben wird beispielsweise über einen Zufuhrkanal durch die Kolbenstange und den Entlastungskolben hindurch mit Entlastungsdruck beaufschlagt, während die Aushubkammer, die auf der vom Entlastungskolben abgewandten Seite des Schwimmkolbens liegt, vom Schlepper her bzw. über ein Steuergerät mit Aushubdruck beaufschlagt werden kann. Während beim Ausheben der Aushubdruck den schwimmenden Kolben auf den Entlastungskolben zutreibt und den Entlastungskolben mitnimmt bzw. antreibt, wird der Schwimmkolben bei abgeschaltetem Aushubdruck bzw. in Schwimmstellung geschalteter Aushubkammer vom Entlastungsdruck in der Entlastungskammer zwischen Entlastungskolben und Aushubkolben in eine Endstellung getrieben, sodass der Aushubkolben im Entlastungsbetrieb die Bewegungen des Entlastungskolben, beispielsweise bei Bodenanpassbewegungen des Arbeitsaggregats, nicht mehr mitmachen muss.

Bei einer solchen entkoppelten Lösung mit einer Ausbildung des Aushubkolbens als Schwimmkolben entsteht jedoch eine Abhängigkeit zwischen Entlastungsdruck und Aushubdruck dahingehend, dass der Entlastungsdruck nur so hoch eingestellt werden kann, dass der Aushubdruck den Schwimmkolben beim Ausheben in die Vorgewende- bzw. Transportstellung vollends gegen den Entlastungszylinder fahren kann, um eine definierte Vorgewende- bzw. Transportstellung zu erzielen. Um trotz begrenztem Entlastungsdruck ausreichende Entlastungskräfte zu erzielen, wurde bereits angedacht, die Zylinder bzw. Kolben mit größeren Querschnittsflächen zu versehen. Da bei größeren Flächen jedoch auch größere Mengen an Druckfluid verdrängt werden, wird ein größerer Druckspeicher benötigt. Gleichzeitig muss eine ausreichende Hydraulikleistung vom Schlepper bereitstellbar sein.

Um das Problem der Trägheit im Entlastungsbetrieb anzugehen, schlägt die Schrift EP 34 27 561 A1 eine Druckzylindereinheit vor, bei der der Entlastungskolben bzw. dessen Kolbenstange einen Plungerkolben bildet, der an seinem dem Schwimmkolben zugewandten Endabschnitt ein geringfügig verbreitertes Kolbenelement aufweist, sodass zusätzlich zur Entlastungskammer zwischen Schwimmkolben und Plungerkolben eine schmale ringförmige dritte Druckkammer entsteht, die ebenfalls mit Entlastungsdruck beaufschlagt werden kann. Hierdurch verspricht sich die Schrift eine verringerte interne Reibung und eine Verkleinerung des Hysterese-Effekts. Es bleibt jedoch die Problematik, dass für ausreichend hohe Entlastungskräfte große Zylinderquerschnitte benötigt werden und damit einhergehend große Volumina zu verdrängen sind, was entsprechende Anforderungen an die Größe des Druckspeichers und das Arbeitshydrauliksystem des Schleppers stellt.

Der vorliegenden Erfindung liegt daher die Aufgabe zugrunde, eine verbesserte landwirtschaftliche Arbeitsmaschine wie Mähwerk sowie eine verbesserte Entlastungs-und Aushubvorrichtung für deren Arbeitsaggregat entsprechend der eingangs genannten Art zu schaffen, die Nachteile des Standes der Technik vermeiden und letzteren in vorteilhafter Weise weiterbilden. Insbesondere soll die Entlastungs- und Aushubvorrichtung im Entlastungsbetrieb leichtfüßig ohne Trägheit arbeiten und ausreichend große Entlastungskräfte bereitstellen können, ohne von der Baugrößer her übermäßig große Druckspeicher oder übermäßig leistungsfähige Druckversorgungen zu benötigen.

Erfindungsgemäß wird die genannte Aufgabe durch eine Entlastungs- und Aushubvorrichtung gemäß Anspruch 1 sowie eine landwirtschaftliche Arbeitsmaschine gemäß Anspruch 21 gelöst. Bevorzugte Ausgestaltungen der Erfindung sind Gegenstand der abhängigen Ansprüche.

Es wird also vorgeschlagen, den Entlastungsdruck des Entlastungskolbens von dem Aushubkolben, der als Los- bzw. Schwimmkolben ausgebildet und somit gegenüber dem Entlastungskolben beweglich ist, zumindest größtenteils fernzuhalten, sodass der Aushubkolben bei der Aushubbewegung nicht den Entlastungsdruck überwinden muss, um in eine definierte Stellung gegen den Entlastungskolben zu fahren. Erfindungsgemäß ist die Entlastungskammer durch eine zwischen dem Entlastungskolben und dem Aushubkolben liegende Kammerwandung begrenzt, wobei zwischen den Entlastungs- und Aushubkolben eine Übertragerstange vorgesehen ist, die durch die genannte Kammerwandung hindurchtritt und von zumindest einem der genannten Entlastungs- und Aushubkolben lose ist. Anders als bei Doppelzylindern, bei denen die Entlastungs- und Aushubkolben an einer gemeinsamen Kolbenstange befestigt sind, kann sich der Entlastungskolben im Entlastungsbetrieb hin- und herbewegen, ohne dass der Aushubkolben diese Bewegungen mitmachen müsste. Gleichzeitig kann durch die Kammerwandung und die hindurchtretende Übertragerstange die bei bisherigen Schwimmkolbenlösungen hinderliche Druckkoppelung beider Kolben vermieden werden. Da die genannte Übertragerstange vom Entlastungskolben und/oder vom Aushubkolben lose ausgebildet ist, kann zwar der Aushubkolben beim Aushub über die genannte Übertragerstange in eine definierte Stellung gegen den Entlastungskolben fahren und diesen antreiben, andererseits aber kann der Aushubkolben bei Abschaltung des Aushubdrucks in eine Endstellung fahren und sich vom Entlastungskolben lösen, da die genannte Übertragerstange an zumindest einem Ende lose ausgebildet ist.

Die genannte Übertragerstange kann in der genannten Kammerwandung verschieblich gelagert und gegenüber der Kammerwandung abgedichtet sein, sodass der auf einer Seite der Kammerwandung herrschende Entlastungsdruck nicht zu Undichtigkeiten führt und kein Druckfluid als Leckage über die genannte Kammerwandung hinwegströmt.

Die genannte Übertragerstange könnte grundsätzlich sowohl vom Entlastungskolben als auch vom Aushubkolben lose ausgebildet sein, sodass sich die Übertragerstange von beiden Kolben entfernen könnte, andererseits aber Druckkräfte zwischen den beiden Entlastungs- und Aushubkolben übertragen kann, insbesondere wenn der Aushubkolben bei Druckbeaufschlagung der Aushubkammer den Entlastungskolben über die Übertragerstange antreibt oder umgekehrt beim Absenken des Arbeitsaggregats der Entlastungskolben bei auf Schwimmstellung geschalteter Aushubkammer über die Übertragerstange den Aushubkolben zurückdrückt, bis der Entlastungskolben in der Arbeitsstellung stehen bleibt. Die Übertragerstange kann dann durch den Entlastungsdruck in der Entlastungskammer, der auf die Stirnseite des in der Entlastungskammer hineinstehenden Abschnitts der Übertragerstange einwirkt, weiter auf den Aushubkolben zu angetrieben werden und den Aushubkolben weiter zurückschieben, bis letztgenannter seine Endstellung erreicht hat.

In alternativer Weiterbildung der Erfindung kann die genannte Übertragerstange aber eine Kolbenstange bilden, die an einem der beiden Aushub- und Entlastungskolben starr befestigt sein kann, wodurch die Führung der Übertragerstange vereinfacht wird. Insbesondere kann die genannte Übertragerstange mit dem Aushubkolben starr verbunden sein und sich vom Entlastungskolben ggf. lösen, wenn im Entlastungsbetrieb der Aushubkolben an sich auf Schwimmstellung geschaltet ist und der Entlastungskolben stehen bleibt, weil das damit gekoppelte Arbeitsaggregat seine Arbeitsstellung erreicht hat.

Die Befestigung der Übertragerstange am Aushubkolben besitzt den Vorteil, dass der Aushubkolben im Entlastungsbetrieb, in welchem die Aushubkammer drucklos geschaltet bzw. in Schwimmstellung geschaltet ist, vom Entlastungsdruck vollends in eine Endstellung gefahren werden kann, sodass sich der Entlastungskolben bei Bodenanpassbewegungen hin- und herbewegen kann, ohne dabei vom Aushubkolben anfänglich noch gestört zu werden. Der Entlastungsdruck kann nämlich auf die Stirnseite der Übertragerstange einwirken, die in der Entlastungskammer liegt, sodass der Entlastungsdruck die Übertragerstange vom Entlastungskolben wegdrückt.

Da der Entlastungsdruck lediglich auf die Stirnseite der Übertragerstange einwirkt, die sehr viel kleiner ist als die relevante Kolbenfläche des Aushubkolbens, über die die Aushubbewegung erzeugt wird, tritt keine nachteilige Beeinflussung bzw. keine relevante Wechselwirkung zwischen Entlastungsdruck und Aushubdruck auf. Insbesondere muss der Aushubdruck nicht den gesamten und auch keinen größeren Teil des Entlastungsdrucks überwinden, welcher auf den Entlastungszylinder einwirkt, da auch der Entlastungszylinder eine sehr viel größere, wirksame Kolbenfläche besitzt als der Übertragerstab bzw. dessen dem Entlastungskolben zugewandte Stirnseite.

Insbesondere kann der Entlastungsdruck unabhängig vom zur Verfügung stellbaren Aushubdruck so groß eingestellt werden, wie es die Gewichtsentlastung des jeweiligen Arbeitsaggregats erfordert, was beispielsweise bei großen Arbeitsbreiten auch ein sehr hoher Entlastungsdruck sein kann, um die Kolbenfläche des Entlastungszylinders nicht übermäßig groß machen zu müssen. Mit anderen Worten ist durch die lose Übertragerstange zwischen Entlastungszylinder und Aushubzylinder und die Kammerwandung, die den Entlastungsdruck, zumindest dessen allergrößten Teil vom Aushubzylinder fernhält, eine Entkoppelung zwischen der Entlastungsfunktion und der Aushubfunktion vorgesehen. Insbesondere können die Flächenverhältnisse zwischen den beiden Aushub- und Entlastungskolben und den damit zusammenwirkenden Zylinderabschnitten und/oder die Flächenverhältnisse zwischen Übertragerstange und den genannten Aushub- und Entlastungskolben frei bzw. passend gewählt werden, um die Entlastungskraft einerseits und die Aushubkraft andererseits durch jeweils gewünschte Drucksysteme bereitstellen zu können, insbesondere einen Druckspeicher zum Bereitstellen des Entlastungsdrucks und eine Arbeitshydraulik eines Schleppers andererseits.

In vorteilhafter Weiterbildung der Erfindung können der Entlastungskolben einerseits und der Aushubkolben andererseits gleiche Querschnittsflächen besitzen bzw. im Durchmesser gleich groß bemessen sein, sodass die beiden Aushub- und Entlastungskolben im an sich gleichgroßen bzw. bemessenen Zylinder laufen können, wobei der an sich durchgängige Zylinder durch die genannte Kammerwandung in zwei Zylinderbereiche unterteilt ist, in denen einerseits der Aushubkolben und andererseits der Entlastungskolben läuft.

Grundsätzlich wäre es aber, wie zuvor erwähnt, auch möglich, dass die Druckzylindereinheit zwei Zylinderabschnitte unterschiedlicher Größe bzw. unterschiedlicher Querschnittsmaße aufweist, die vorteilhafterweise koaxial hintereinander angeordnet sein können, wobei die genannte Kammerwandung zur Begrenzung der Entlastungskammer im Übergangsbereich zwischen den beiden Zylinderabschnitten vorgesehen sein kann.

Der Entlastungszylinder kann in Weiterbildung der Erfindung als Plungerkolben ausgebildet sein, sodass sozusagen der Kolben selbst gleichzeitig auch die Kolbenstange bilden kann, die aus dem Zylinder hervorstehen kann bzw. herausgeschoben werden kann. Alternativ ist es aber auch möglich, den Entlastungskolben an einer deutlich dünneren bzw. im Querschnitt deutlich kleineren Kolbenstange zu befestigen, die dann durch den Entlastungskolben aus dem Zylinder ausfahrbar sein kann. Die Kolbenstange kann dabei in einem Kragenabschnitt des Zylinders verschieblich gelagert sein und durch diesen hindurchtreten.

Die an dem Entlastungszylinder befestigte Kolbenstange bzw. der als Plungerkolben ausgebildete Entlastungszylinder kann an ihrem/seinem aus dem Zylinder heraustretenden Endabschnitt direkt mit einem Aufhängungsteil zur Aufhängung des Arbeitsaggregats angelenkt sein, wobei die Kolbenstange bzw. der Plungerkolben beispielsweise ein Lagerauge aufweisen kann, um gelenkig an einer Lagerkonsole angelenkt zu werden.

Andererseits kann an der am Entlastungszylinder befestigten Kolbenstange bzw. dem Plungerkolben an ihrem/seinem aus dem Zylinder heraustretenden Endabschnitt eine weitere Zylindereinheit angeschlossen sein, um beispielsweise eine Zweistufigkeit beim Aushubvorgang ausführen zu können, insbesondere zunächst in eine teilweise ausgehobene Vorgewendestellung und dann weiter in eine vollends ausgehobene Transportstellung. Beispielsweise können Mähwerke oft im Vorgewende nur ein Stück weit angehoben bzw. nach oben verschwenkt werden, um Bodenfreiraum für den Wendevorgang am Vorgewende zu erzielen. Soll indes das Mähwerk auf der Straße transportiert werden, werden die als Mähwerke ausgebildeten Arbeitsaggregate oft in eine aufrechte Transportstellung verschwenkt, um die Straßenbreite einhalten zu können.

Der Aushubvorgang in das Vorgewende wird sodann von der einen Druckzylindereinheit und das weitere Ausheben in die Transportstellung von der weiteren bzw. anderen Druckzylindereinheit bewerkstelligt. Dabei kann die zuvor beschriebene Druckzylindereinheit mit Entlastungskolben und schwimmendem Aushubkolben dazu ausgebildet sein, den Aushub in die Vorgewendestellung zu bewerkstelligen und die zusätzlich angeschlossene Druckzylindereinheit den weiteren Aushub in die Transportstellung bewirken. Alternativ kann aber auch vorgesehen sein, dass die weitere Druckzylindereinheit, die an der Kolbenstange des Entlastungskolbens angeschlossen ist, dazu ausgebildet ist, den Aushub in das Vorgewende zu bewerkstelligen und die Druckzylindereinheit umfassend den Entlastungszylinder und den schwimmenden Aushubzylinder dazu auszubilden, den weiteren Aushub in die Transportstellung zu bewerkstelligen. Letzteres besitzt den Vorteil, dass im Vorgewende der Entlastungszylinder noch bewegungsdämpfend wirken kann und Holprigkeiten im Vorgewende schlucken kann, während andererseits in der Transportstellung dann eine definierte Endstellung angefahren wird.

Die genannte Kammerwandung, die zwischen Entlastungskolben und Arbeitskolben vorgesehen ist und die Entlastungskammer bzw. den darin herrschenden Entlastungsdruck vom Arbeitskolben fernhält, kann in Weiterbildung der Erfindung dazu ausgebildet sein, einen Druckkanal zu besitzen, der die Entlastungskammer mit einem außenseitig an der Druckzylindereinheit vorgesehenen Druckanschluss verbindet, über den der Entlastungsdruck zuführbar ist, beispielsweise ein Druckspeicher anschließbar ist. Hierdurch dient die genannte Kammerwandung nicht nur der Begrenzung der Entlastungskammer, sondern auch der Bereitstellung des Entlastungsdrucks in der Entlastungskammer.

Die Erfindung wird nachfolgend anhand eines bevorzugten Ausführungsbeispiels und zugehörigen Zeichnungen näher erläutert. In den Zeichnungen zeigen:

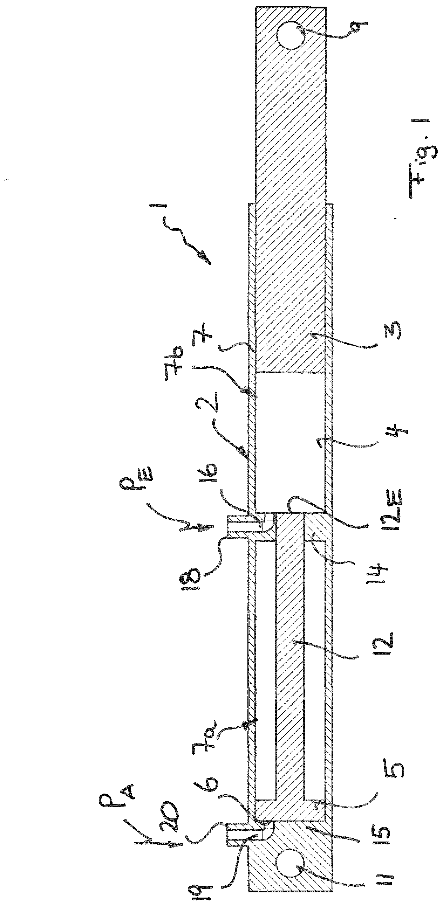

- Fig. 1:: einen Längsschnitt einer Entlastungs- und Aushubvorrichtung für ein landwirtschaftliches Arbeitsaggregat wie beispielsweise ein Mähwerk, gemäß einer vorteilhaften Ausführung der Erfindung, wobei die Druckzylindereinheit im Entlastungsbetrieb in der abgesenkten Arbeitsstellung des Arbeitsaggregats gezeigt ist, in der der Aushubkolben in eine Endstellung und die Übertragerstange vom Entlastungskolben gelöst ist,

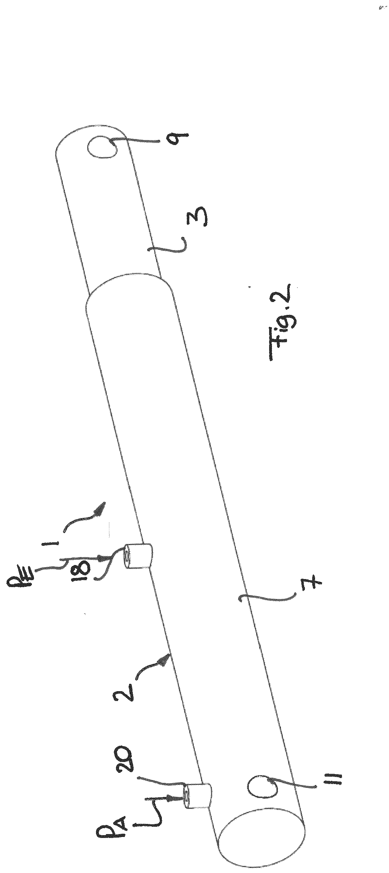

- Fig. 2:: eine perspektivische Darstellung der Entlastungs- und Aushubvorrichtung aus Fig. 1,

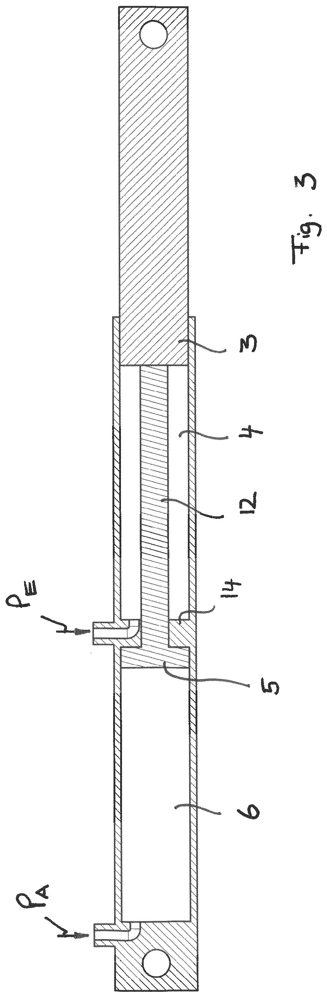

- Fig. 3:: einen Längsschnitt der Entlastungs- und Aushubvorrichtung aus den vorhergehenden Figuren, wobei die Druckzylindereinheit in einer Aushubstellung gezeigt ist, in der der Aushubkolben durch Druckbeaufschlagung in der Aushubkammer in eine Aushubstellung verfahren ist und den Entlastungskolben in die Aushubstellung verfahren hat,

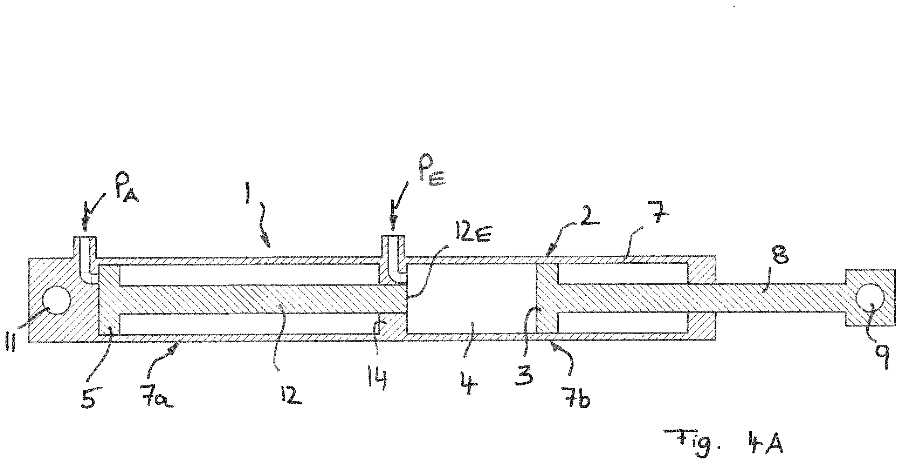

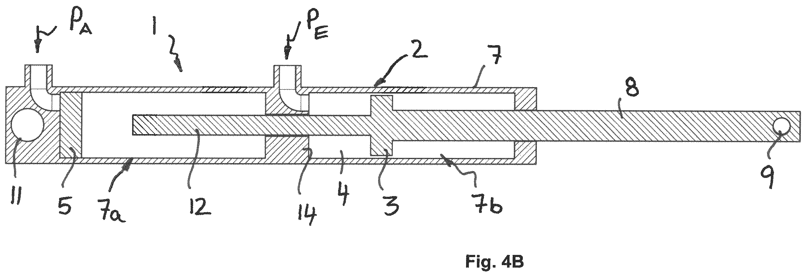

- Fig. 4:: einen Längsschnitt durch eine Entlastungs- und Aushubvorrichtung ähnlich Fig. 1 nach einer weiteren vorteilhaften Ausführung der Erfindung, gemäß der der Entlastungskolben der Druckzylindereinheit nicht als Plungerkolben ausgebildet ist wie in Fig. 1 gezeigt, sondern mit einer im Durchmesser deutlich verjüngten Kolbenstange versehen ist, wobei die Ansicht 4A eine Ausführung mit am Aushubkolben befestigter Übertragerstange zeigt und die Ansicht 4B eine Ausführung mit am Entlastungskolben befestigter Übertragerstange zeigt,

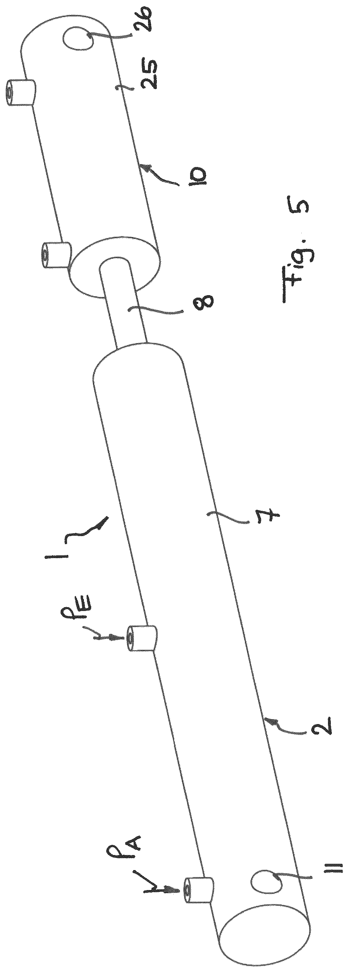

- Fig. 5:: eine perspektivische Darstellung einer Entlastungs- und Aushubvorrichtung nach einer weiteren vorteilhaften Ausführung der Erfindung, gemäß der die am Entlastungskolben befestigte und aus der Druckzylindereinheit herausstehende Kolbenstange an eine weitere Druckzylindereinheit an- geschlossen ist, um das Arbeitsaggregat zweistufig zunächst in die Vorgewendestellung und dann in die vollends ausgehobene Transportstellung fahren zu können,

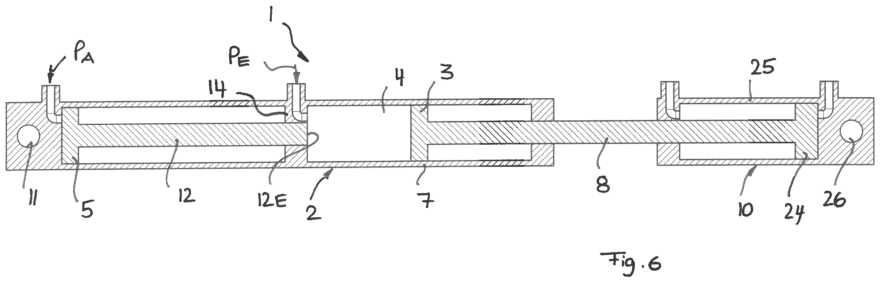

- Fig. 6:: einen Längsschnitt durch die Entlastungs- und Aushubvorrichtung aus Fig. 5, die die zusätzlich angeschlossene Druckzylindereinheit der zweiten Stufe zeigt, wobei die Entlastungs- und Aushubvorrichtung im Entlastungsbetrieb in der abgesenkten Arbeitsstellung des Arbeitsaggregats dargestellt ist, in der der Entlastungskolben vom in eine Endstellung verfahrenen Aushubkolben und der Übertragerstange gelöst ist und die Zylindereinheit der zweiten Stufe eingefahren ist,

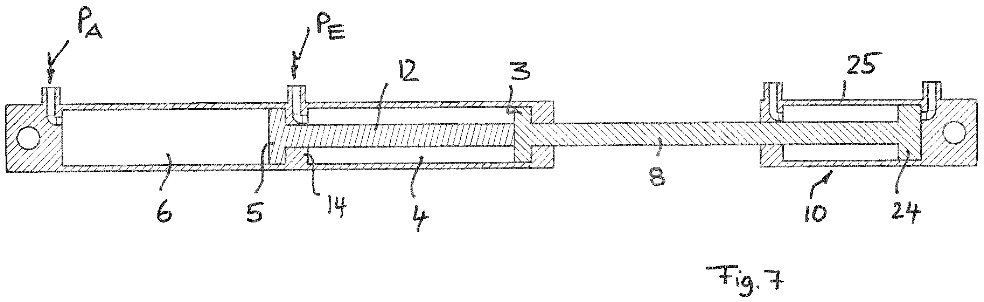

- Fig. 7:: einen Längsschnitt durch die Entlastungs- und Aushubvorrichtung aus den vorhergehenden Figuren, wobei die Druckzylindereinheit umfassend den Entlastungskolben in der ausgefahrenen Vorgewendestellung gezeigt ist, in der die Zylindereinheit der zweiten Stufe weiterhin eingefahren ist,

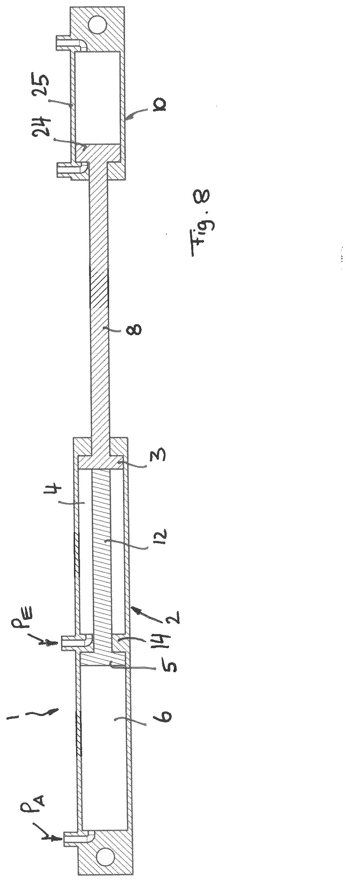

- Fig. 8:: einen Längsschnitt durch die Entlastungs- und Aushubvorrichtung aus den Figuren 5 bis 7, wobei die Entlastungs- und Aushubvorrichtung in der gänzlich ausgehobenen Transportstellung gezeigt ist, in der sowohl der Aushubzylinder als auch die zusätzliche Zylindereinheit der zweiten Stufe ausgefahren sind,

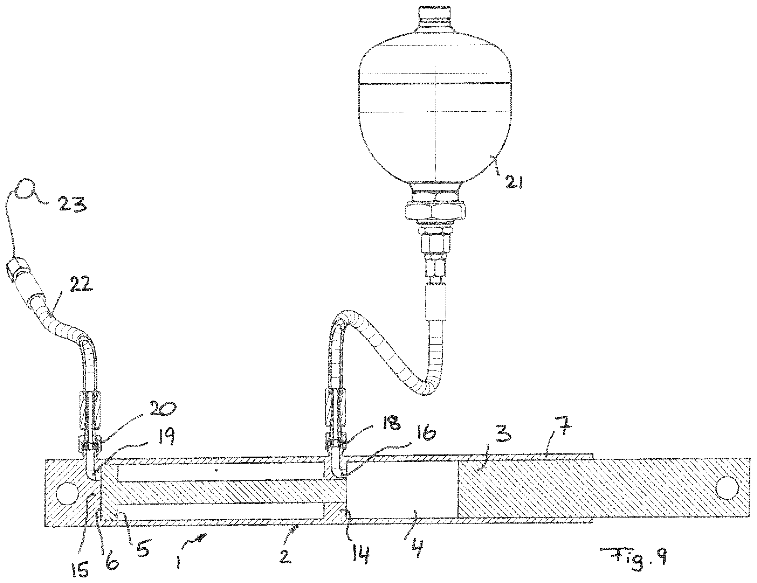

- Fig. 9:: eine Schnittansicht einer Entlastungs- und Aushubvorrichtung ähnlich Fig. 1, wobei die angeschlossenen Druckversorgungen dargestellt sind, nämlich ein Druckspeicher zur Bereitstellung des Entlastungsdrucks und eine Druckleitung zum Anschließen an die Druckversorgung eines Schleppers zur Beaufschlagung der Aushubkammer,

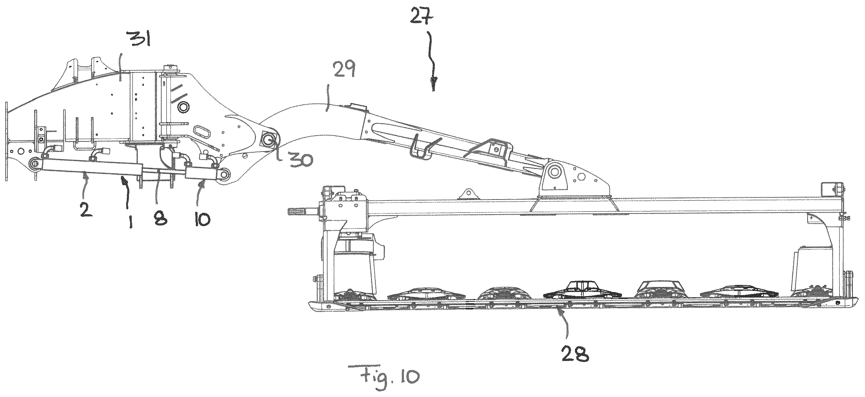

- Fig. 10:: eine schematische Heckansicht einer landwirtschaftlichen Mähmaschine zum Anbau an einen nicht dargestellten Schlepper, wobei das Mähwerk der Mähmaschine in einer abgesenkten Arbeitsstellung dargestellt ist, in der die an den Tragarm angeschlossene Entlastungs- und Aushubvorrichtung sich in der in Fig. 6 dargestellten Entlastungsbetriebsstellung befindet,

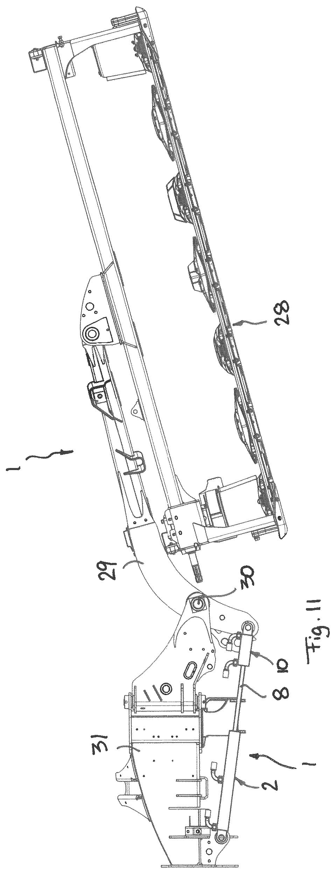

- Fig. 11:: eine Heckansicht der Mähmaschine ähnlich Fig. 10, wobei das Mähwerk in der ausgehobenen Vorgewendestellung gezeigt ist, in der sich die Entlastungs- und Aushubvorrichtung in der in Fig. 7 gezeigten Vorgewendestellung befindet,

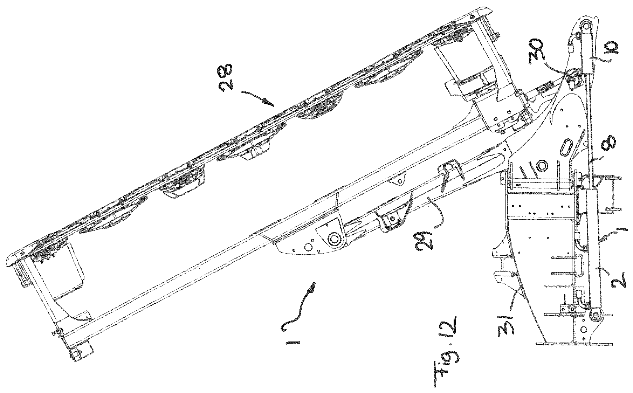

- Fig. 12:: eine weitere Heckansicht der Mähmaschine aus den Figuren 10 und 11, wobei sich das Mähwerk in der vollends ausgehobenen Transportstellung befindet, wobei die Entlastungs- und Aushubvorrichtung, die am Tragarm des Mähwerks angeschlossen ist, sich in der Fig. 8 gezeigten vollends ausgefahrenen Transportstellung befindet,

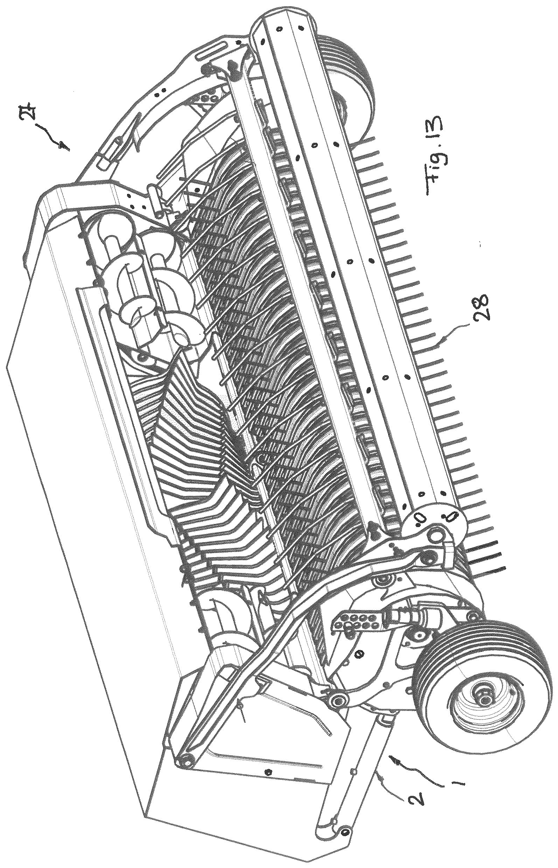

- Fig. 13:: eine perspektivische Ansicht der Pickup einer Ballenpresse oder eines Ladewagens, wobei der Pickup-Stachelwalze eine Entlastungs- und Aushubvorrichtung zum Entlasten und Ausheben zugeordnet ist, wie sie beispielsweise in den Figuren 1 bis 4 dargestellt ist, und

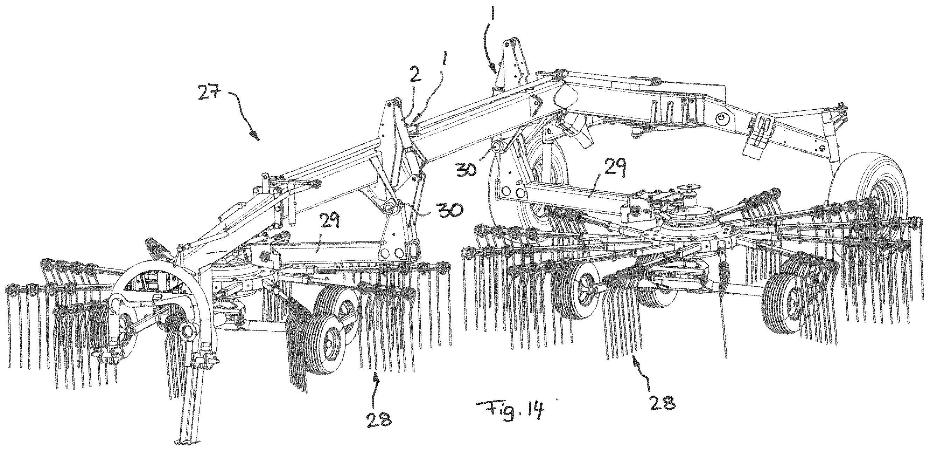

- Fig. 14:: eine perspektivische Darstellung einer Heuwerbungsmaschine in Form eines Kreiselschwaders, dessen Schwadkreisel an schwenkbaren Tragarmen aufgehängt sind, welche mittels einer Entlastungs- und Aushubvorrichtung entlastbar und aushebbar sind, wie sie in den Figuren 5 bis 8 gezeigt ist.

Wie die Figuren zeigen, umfasst die Entlastungs- und Aushubvorrichtung 1 eine Druckzylindereinheit 2, die einen Entlastungskolben 3 sowie einen Aushubkolben 5 aufweist.

Die genannten Entlastungs- und Aushubkolben 5 können dabei in einem gemeinsamen Zylindergehäuse 7 sitzen, das zwei Zylinderabschnitte 7a und 7b für die beiden genannten Entlastungs- und Aushubkolben 3, 5 umfassen kann. Insbesondere kann das genannte Zylindergehäuse 7 einstückig ausgebildet sein bzw. einen durchgängigen Zylindermantel umfassen, in welchem die beiden Entlastungs- und Aushubkolben 3, 5 hintereinander und insbesondere koaxial zueinander angeordnet sein können. Die koaxiale, hintereinander und voneinander beabstandete Anordnung der beiden Entlastungs- und Aushubkolben 3, 5 kann dabei unabhängig von der genannten Einstückigkeit oder Mehrteiligkeit des Zylindergehäuses von Vorteil sein und eine kompakte Bauweise bringen.

Wie die Figuren zeigen, können die beiden Entlastungs- und Aushubkolben 3, 5 dieselbe Querschnittsfläche besitzen. Dementsprechend können die Zylinderabschnitte 7a, 7b gleich groß ausgebildete Zylinderkammern besitzen, in welchen die genannten Entlastungs- und Aushubkolben 3, 5 laufen können.

Der Entlastungskolben 3 kann dabei eine Kolbenstange 8 aufweisen, die auf einer Stirnseite aus dem Zylindergehäuse 7 heraustritt, vgl. Fig. 4 oder Fig. 6. Alternativ hierzu kann der Entlastungszylinder 3 einen Plungerkolben bilden, der einen stirnseitig aus dem Zylindergehäuse 7 heraustretenden Plungerabschnitt 3a aufweisen kann, vgl. Fig. 1. An der genannten Kolbenstange 8 bzw. dem heraustretenden Plungerabschnitt 3a kann ein Lagerauge 9 vorgesehen sein, an dem die Druckzylindereinheit 1 an einem Aufhängungsteil gelenkig angelenkt werden kann, vgl. Fig. 13. Alternativ kann eine weitere Druckzylindereinheit 10, die eine zweite Aushubstufe bilden kann, an dem genannten Plungerabschnitt 3a bzw. der Kolbenstange 8 befestigt sein, vgl. Figuren 5-8 sowie Figuren 10-12 sowie 14.

Die genannte Druckzylindereinheit 2 umfassend den genannten Entlastungszylinder 3 und den Aushubzylinder 5 kann an dem genannten Zylindergehäuse 7 ein weiteres Lagerauge 11 besitzen und an einem weiteren Aufhängungsteil gelenkig angelenkt werden. Anstelle der genannten Lageraugen 9, 11 können auch andere geeignete Lagermittel wie beispielsweise ein Bolzenstummel, eine Gelenkschale oder ähnliches zum Anlenken der Druckzylindereinheit 1 vorgesehen sein.

Wie die Figuren 1, 3, 4A, 4B sowie 6-8 zeigen, ist der Aushubkolben 5 relativ zum Entlastungskolben 3 lose ausgebildet und kann von dem genannten Entlastungskolben 3 wegbewegt werden, ohne dass der Enlastungskolben 3 mitgenommen werden würde. Andererseits kann der Aushubkolben 5 den Entlastungskolben 3 antreiben, und zwar über eine Übertragerstange 12, die nach Art einer Kolbenstange an dem Aushubkolben 5 starr befestigt sein kann und andererseits ein loses Ende 13 umfasst, das gegen den Entlastungskolben 3 drückbar ist, um den Entlastungskolben 3 anzutreiben, insbesondere in eine Richtung zu verschieben, in der die Kolbenstange 8 bzw. der Plungerabschnitt 3a weiter aus dem Zylindergehäuse 7 ausfährt, vgl. Figur 4A.

Die genannte Übertragerstange 12 kann aber auch an dem Entlastungskolben 3 starr befestigt sein und mit ihrem losen Ende 13 gegen den Aushubkolben gedrückt werden, um bei Betätigen des Aushubkolbens 5 diesen gegen das genannte lose Ende 13 zu drücken und somit über die Übertragerstange 12 den Entlastungskolben 3 anzutreiben, insbesondere in eine Richtung zu verschieben, in der die Kolbenstange 8 bzw. der Plungerabschnitt 3a weiter aus dem Zylindergehäuse 7 ausfährt, vgl. Figur 4B.

Zwischen dem Entlastungskolben 3 und dem Aushubkolben 5 ist eine Kammerwandung 14 vorgesehen, die das Zylindergehäuse 7 in die beiden genannten Zylinderabschnitte 7a, 7b unterteilt und die Entlastungskammer 15 begrenzt, von welcher her der Entlastungskolben 3 mit Entlastungsdruck p_{E} beaufschlagbar ist. Die genannte Kammerwandung 14 hält den genannten Entlastungsdruck Entlastungsdruck p_{E} größtenteils vom Aushubkolben 5 fern. Genauer gesagt gerät nur ein Bruchteil der Entlastungskraft, die der Entlastungsdruck p_{E} auf den Entlastungskolben 3 ausübt, auf die Übertragerstange 12 und von dieser auf den Aushubkolben 5, da der genannte Entlastungsdruck p_{E} auch auf die Stirnseite der Übertragerstange 12 wirkt.

Die genannte Übertragerstange 12 tritt nämlich durch die Kammerwandung 14 hindurch und ist insofern dem Entlastungsdruck p_{E} in der Entlastungskammer 15 ausgesetzt. Allerdings besitzt die genannte Übertragerstange 12 eine Querschnittsfläche, die nur einen Bruchteil der Querschnittsfläche des Entlastungskolbens 3 bildet, so dass die vom Entlastungsdruck p_{E} auf die Übertragerstange 12 ausgeübte Kraft signifikant kleiner ist.

Die genannte Übertragerstange 12 ist in der Kammerwandung 14 verschieblich gelagert und druckdicht abgedichtet, so dass der Entlastungsdruck p_{E} keine Leckage an der Schnittstelle zwischen der Übertragerstange 12 und der Kammerwandung 14 verursachen kann. Der Entlastungsdruck p_{E} bleibt auf die Entlastungskammer 15 beschränkt.

In dem Zylinderabschnitt 7a, in welchem der Aushubkolben 5 untergebracht ist, befindet sich eine Aushubkammer 6, die sich auf der vom Entlastungskolben 3 abgewandten Seite des Aushubkolbens 5 befindet. Insbesondere kann die genannte Aushubkammer 6 zwischen dem Aushubkolben 5 und einer Stirnseitenwandung 15 des Zylindergehäuses 7 ausgebildet sein.

Wie beispielsweise Fig. 1 und Fig. 6 zeigen, kann der Entlastungsdruck p_{E} über einen Druckkanal 16 von der Außenseite des Zylindergehäuses 7 in die Entlastungskammer 4 gegeben werden. Der genannte Druckkanal 16 kann vorteilhafterweise teilweise durch die genannte Kammerwandung 14 geführt sein, vgl. Fig. 1 und Fig. 6, und mit einem außenseitigen Druckanschluss 18 verbunden sein.

Der Aushubdruck p_{A} kann vorteilhafterweise ebenfalls von einer Außenseite des Zylindergehäuses 7 her in die Aushubkammer 6 gegeben werden, wobei hierfür ein Druckkanal 19 vorgesehen sein kann, der durch die genannte Stirnseitenwandung 15 führen kann, die die Aushubkammer 6 stirnseitig begrenzt und auch einen Anschlag für den Aushubkolben 5 bilden kann, der dessen Endstellung definiert.

Der genannte Druckkanal 19 kann auf der Außenseite des Zylindergehäuses 7 mit einem Druckanschluss 20 verbunden sein.

Wie Fig. 9 verdeutlicht, kann an den Druckanschluss 18 des Druckkanals 16 beispielsweise eine Druckspeicher 21 angeschlossen werden, um den Entlastungdruck p_{E} für den Entlastungskolben 3 bereitzustellen. Je nach zur Verfügung stehendem Druckversorgungssystem kann der Entlastungsdruck aber beispielsweise auch vom Schlepper her bereitgestellt werden, an den die landwirtschaftliche Arbeitsmaschine angebaut wird.

Der Aushubdruck p_{A} für den Aushubkolben 5 kann über eine Druckleitung 22 beispielsweise vom Druckversorgungssystem des Schleppers bereitgestellt werden und über ein Drucksteuergerät 23 beispielsweise in Form eines Steuer- und/oder Schaltventils gesteuert werden, so dass die Aushubkammer 6 mit dem gewünschten Aushubdruck p_{A} beaufschlagt oder drucklos bzw. in Schwimmstellung geschaltet werden kann. Wie die Figuren 1, 4A, 4B, 6 und 9 zeigen, ist im Entlastungsbetrieb, in dem das Arbeitsaggregat in der abgesenkten Arbeitsstellung ist und nur gewichtsentlastet wird, nur die Entlastungskammer 4 mit dem Entlastungsdruck p_{E} beaufschlagt, während die Aushubkammer 6 drucklos geschaltet ist. Hierdurch kann sich der Entlastungskolben 3 bei Bodenanpassbewegungen des Arbeitsaggregats unter Überwindung des Entlastungsdrucks p_{E} im Zylinderabschnitt 7B hin- und herbewegen, ohne dass der Aushubkolben 5 diese Bewegungen mitmachen würde. Wie die genannten Figuren zeigen, ist der Aushubkolben 5 in einer vom Entlastungskolben 3 entfernten Endstellung, insbesondere auf Anschlag an die genannte Stirnseitenwandung 15 gefahren. Da die Aushubkammer 6 vom Drucksteuergerät 23 drucklos geschaltet ist, kann der auf die Stirnseite 12E der Übertragerstange 12 wirkende Entlastungsdruck p_{E} die Übertragerstange 12 vom Entlastungskolben 3 wegtreiben und damit den Aushubkolben 5 vom Entlastungskolben 3 wegtreiben, vgl. Figur 4A. Ist die Übertragerstange 12 am Entlastungskolben 3 befestigt, vgl. Figur 4B, kann der Aushubkolben 5 ebenfalls vom Entlastungskolben 3 weggetrieben werden, wobei dann allerdings die Übertragerstange 12 am Entlastungskolben verbleibt und sich vom Aushubkolben löst, vgl. Fig. 4B.

Soll das an die Entlastungs- und Aushubvorrichtung 1 angeschlossene Arbeitsaggregat ausgehoben werden, beispielsweise in die Vorgewendestellung, wird vom Drucksteuergerät 23 der Aushubdruck p_{A} in die Aushubkammer 6 gegeben und damit auf den Aushubkolben 5 gegeben. Der Aushubdruck p_{A} treibt den Aushubkolben 5 mit samt der Übertragerstange 12 auf den Entlastungskolben 3 zu. Da die Übertragerstange 12, genauer gesagt deren Stirnseite 12E von der Fläche her sehr viel kleiner ist als die wirksame Kolbenfläche des Entlastungskolbens 3, bewirkt selbst ein größerer Entlastungsdruck in der Entlastungskammer 4 keine relevante Kraft, die der Aushubkraft durch den Aushubdruck p_{A} entgegenwirken würde, sodass selbst bei einem Aushubdruck p_{A}, der kleiner ist als der Entlastungsdruck p_{E}, der Übertrager 12 auf Anschlag gegen den Entlastungskolben 3 fährt und den Entlastungskolben 3 mitnimmt bzw. antreibt, wenn der Aushubdruck p_{A} den Aushubkolben 5 weiter in Richtung auf den Entlastungskolben 3 zutreibt. Hierdurch wird der Entlastungskolben 3 bzw. die daran befestigte Kolbenstange 8 oder der aus dem Zylinder heraustretende Plungerabschnitt 3A weiter aus dem Zylindergehäuse 7 ausgefahren, bis der Aushubkolben 5 und/oder der Entlastungskolben 3 gegen einen Anschlag fährt. Dies kann die genannte Kammerwandung 14 sein, gegen die der Aushubkolben 5 fahren kann, vgl. Figur 3, und/oder eine stirnseitige Wandung des Zylindergehäuses 7, durch die die genannte Kolbenstange 8 hindurchtritt, vgl. Figur 7. Hierdurch wird die ausgehobene Endstellung der Druckzylindereinheit 2 definiert.

Soll die Aushubbewegung für das Arbeitsaggregat zweistufig ausgeführt werden, beispielsweise um das Arbeitsaggregat zunächst in eine teilweise ausgehobene Vorgewendestellung zu fahren, vgl. Figur 11, und sodann auch noch weiter in eine Straßentransportstellung ausheben zu können, vgl. beispielsweise Figur 12, kann an der am Entlastungskolben 3 befestigten Kolbenstange 8 oder ggf. auch an dem aus dem Zylinder heraustretenden Plungerabschnitt 3A eine weitere Druckzylindereinheit 10 montiert sein, die einen zusätzlichen Stellweg bereitstellen kann. Beispielsweise kann, wie dies die Figuren 6 bis 8 zeigen, an der Kolbenstange 8 ein weiterer Kolben 24 befestigt sein, der in einem Zylindergehäuse 25 verschieblich aufgenommen ist, vgl. vergleichend die Figuren 7 und 8, so dass das Zylindergehäuse 25 eine als zweite Aushubstufe dienende Stellbewegung ausführen kann.

Am Zylindergehäuse 25 kann ein Lagerauge 26 oder, wie zuvor schon erwähnt, ein anderes geeignetes Lagermittel wie beispielsweise ein Stummelbolzen oder eine Lagerschale angebracht sein, um ein Aufhängungsteil daran gelenkig befestigen zu können. Vorteilhafterweise kann die genannte zweite Druckzylindereinheit 10 doppeltwirkend ausgebildet sein, um Stellkräfte in beide Richtungen erzeugen zu können, was hilfreich ist, um beispielsweise das Arbeitsaggregat aus einer überstreckten Transportstellung, vgl. Figur 12, auch ein Stück weit aktiv zurück Richtung Vorgewendestellung bzw. Arbeitsstellung bewegen zu können. Wie die Figuren 7 und 8 verdeutlichen, kann das Zylindergehäuse 25 beidseits des Kolbens 24 zwei Drucckammern begrenzen, um den genannten Kolben 24 von beiden Seiten her mit Druck beaufschlagen zu können.

Die Druckzylindereinheit 10 der zweiten Aushubstufe kann vorteilhafterweise vom Druckversorgungssystem des Schleppers her bedient werden, vorzugsweise über ein Drucksteuergerät 23, um gezielt ein Verfahren des Kolbens 24 relativ zum Zylindergehäuse 25 veranlassen und steuern zu können.

Wie die Figuren 10 bis 12 verdeutlichen, kann die landwirtschaftliche Arbeitsmaschine 27 vorteilhafterweise als Mähmaschine ausgebildet sein, deren Arbeitsaggregat 28 ein Mähwerk sein kann, das an einem Tragarm 29 höhenbeweglich aufgehängt sein kann.

Der genannte Tragarm 29 kann beispielsweise um eine liegende Schwenkachse 30 schwenkbar an einem Anbaubock 31 gelagert sein, mittels dessen die Arbeitsmaschine 27 an einem nicht gezeigten Schlepper angebaut werden kann.

Wie die Figuren 10 bis 12 zeigen, kann zur Gewichtsentlastung und zum Ausheben des Arbeitsaggregats 29 zwischen dem Tragarm 29 und dem Anbaubock 31 die Entlastungs- und Aushubvorrichtung 1 verbaut sein, insbesondere jeweils an zwei Anlenkpunkten gelenkig angelenkt sein.

Beispielsweise kann eine Entlastungs- und Aushubvorrichtung 1 mit einer zweiten Aushubstufe verbaut sein, wie sie die Figuren 6 bis 8 zeigen.

Im Entlastungsbetrieb in der abgesenkten Arbeitsstellung gemäß Figur 10 arbeitet die Entlastungs- und Aushubvorrichtung 1 aktiv an sich nur mit dem Entlastungskolben 3, so wie dies die Figur 6 verdeutlicht. Soll das Arbeitsaggregat 28 in die Vorgewendestellung ausgehoben werden, vgl. Figur 11, wird der Aushubdruck p_{A} in die Aushubkammer 6 gegeben, sodass der Aushubkolben 5 den Entlastungskolben 3 und dessen Kolbenstange 8 ausfährt, vgl. Figur 7. Soll das Arbeitsaggregat 29 noch weiter in die Transportstellung ausgehoben werden, wird die zweite Druckzylindereinheit 10 betätigt, sodass die Kolbenstange 8 auch aus dem Zylindergehäuse 25 ausgefahren wird, vgl. Figur 8.

Wie Figur 13 zeigt, kann als landwirtschaftliche Arbeitsmaschine 27 aber auch eine Ballenpresse oder ein Ladewagen vorgesehen sein, der eine höhenverstellbare Pickup als Arbeitsaggregat 26 besitzt. Die Stachelwalzeneinheit der Pickup kann durch eine Entlastungs- und Aushubvorrichtung 1, wie sie beispielsweise die Figuren 1 bis 4 oder Figur 9 zeigen, gewichtsentlastet werden. Wie Figur 13 zeigt, kann die Druckzylindereinheit 2 der Entlastungs- und Aushubvorrichtung 1 einerseits gelenkig an einem Aufhängungsteil der höhenverstellbaren Pickup angelenkt sein und andererseits an einem Maschinenrahmenteil angelenkt sein, vgl. Figur 14.

Figur 14 zeigt ein weiteres Ausführungsbeispiel einer landwirtschaftlichen Arbeitsmaschine 27, nämlich in Form eines Kreiselschwaders, dessen Rechkreisel jeweils ein höhenverstellbares Arbeitsaggregat 28 bilden, welches wiederum über schwenkbare Tragarme 29 an einem zentralen Maschinenrahmen aufgehängt ist. Die Entlastungs- und Aushubvorrichtungen 1 können dabei wiederum zwischen einer Aufhängungskonsole am Maschinenrahmen einerseits und den genannten Tragarmen 29 andererseits verbaut, insbesondere gelenkig angelenkt sein, um die Rechkreisel einerseits gewichtsentlasten und andererseits auch ausheben zu können.

## Patentansprüche

1. Entlastungs- und Aushubvorrichtung für ein landwirtschaftliches Arbeitsaggregat (28) wie Mähwerk, mit einer Druckzylindereinheit (2), die einen Entlastungskolben (3), der von einer Entlastungskammer (4) mit einem Entlastungsdruck (p_{E}) beaufschlagbar ist, sowie einem Aushubkolben (5), der von einer Aushubkammer (6) mit einem Aushubdruck (p_{A}) beaufschlagbar ist, aufweist, wobei der Aushubkolben (5) als Schwimm- oder Loskolben ausgebildet ist, der gegenüber dem Entlastungskolben (3) bewegbar ist und beim Aushub des Arbeitsaggregats (28) den Entlastungskolben (3) antreibt, **dadurch gekennzeichnet, dass** die Entlastungskammer (4) durch eine zwischen den Entlastungs- und Aushubkolben (5) liegende Kammerwandung (14) begrenzt ist, wobei zwischen den Entlastungs- und Aushubkolben (3, 5) eine Übertragerstange (12) vorgesehen ist, die durch die genannte Kammerwandung (14) hindurchtritt und von zumindest einem der genannten Entlastungs- und Aushubkolben (3, 5) lose ausgebildet ist.

2. Entlastungs- und Aushubvorrichtung nach dem vorhergehenden Anspruch, wobei die Übertragerstange (12)
a.) relativ zum Entlastungskolben (3) lose ist und eine am Aushubkolben (5) befestigte Kolbenstange bildet, die zusammen mit dem Aushubkolben (5) relativ zum Entlastungskolben (3) verschiebbar ist, oder
b.) relativ zum Aushubkolben (5) lose ist und eine am Entlastungskolben (3) befestigte Kolbenstange bildet, die zusammen mit dem Entlastungskolben (3) relativ zum Aushubkolben (5) verschiebbar ist

3. Entlastungs- und Aushubvorrichtung nach einem der vorhergehenden Ansprüche, wobei die Übertragerstange (12) in der Kammerwandung (14) verschieblich und fluiddicht gelagert ist.

4. Entlastungs- und Aushubvorrichtung nach einem der vorhergehenden Ansprüche, wobei die Entlastungskammer (4) leckagefrei von einem Zylinderabschnitt (7a), in dem der Aushubkolben (5) verschieblich aufgenommen ist, abgetrennt ist.

5. Entlastungs- und Aushubvorrichtung nach einem der vorhergehenden Ansprüche, wobei die Entlastungs- und Aushubkolben (3, 5) koaxial zueinander und axial voneinander beabstandet in einem gemeinsamen Zylindergehäuse (7) aufgenommen sind, das zwei starr miteinander verbundene Zylinderabschnitte (7a, 7b) umschließt, die durch die genannte Kammerwandung (14) voneinander getrennt sind, wobei in dem einen Zylinderabschnitt (7a) der Aushubkolben (5) verschieblich aufgenommen ist und in dem anderen Zylinderabschnittt (7b) der Entlastungskolben (3) verschieblich aufgenommen ist, wobei in dem genannten einen Zylinderabschnitt (7a) die Aushubkammer (6) vorzugsweise auf einer vom Entlastungskolben (3) abgewandten Seite des Aushubkolbens (5) vorgesehen ist und in dem genannten anderen Zylinderabschnitt (7b) die Entlastungskammer (4) vorzugsweise auf der dem Aushubkolben (5) zugewandten Seite des Entlastungskolbens (3) vorgesehen ist.

6. Entlastungs- und Aushubvorrichtung nach einem der vorhergehenden Ansprüche, wobei die Entlastungskammer (4) und die Aushubkammer (6) zumindest näherungsweise gleichgroße Kammerquerschnittsflächen besitzen und/oder die Entlastungs- und Aushubkolben (3, 5) zumindest näherungsweise gleichgroße Kolbenquerschnittsflächen besitzen.

7. Entlastungs- und Aushubvorrichtung nach einem der vorhergehenden Ansprüche, wobei die Übertragerstange (12) eine Querschnittsfläche besitzt, die kleiner als 50% oder kleiner als 25% der Kammerquerschnittsfläche der Entlastungskammer (4) und/oder der Aushubkammer (6) ist, wobei die Übertragerstange (12)
- an einem in die Entlastungskammer (4) einfahrbaren, frei auskragenden Endabschnitt eine Stirnseite (12E) besitzt, deren Stirnseitenfläche weniger als 50% oder weniger als 25% oder weniger als 15% der Kolbenquerschnittsfläche des Entlastungskolbens (3) und/oder der Kammerquerschnittsfläche der Entlastungskammer (4) ist, und/oder
- an einem in den die Aushubkammer (6) aufweisenden Zylinderabschnitt (7a) einfahrbaren, frei auskragenden Endabschnitt eine Stirnseite (12A) besitzt, deren Stirnseitenfläche weniger als 50% oder weniger als 25% oder weniger als 15% der Kolbenquerschnittsfläche des Aushubkolbens (5) und/oder der Kammerquerschnittsfläche der Aushubkammer () ist.

8. Entlastungs- und Aushubvorrichtung nach einem der vorhergehenden Ansprüche, wobei der Entlastungskolben (3) einen Plungerkolben bildet, der einen stirnseitig aus einem Zylindergehäuse (7) der Druckzylindereinheit (2) herausfahrbaren Plungerabschnitt (3A) besitzt, der Anlenkmittel (11) zum Anlenken an einem Aufhängungsteil besitzt.

9. Entlastungs- und Aushubvorrichtung nach einem der Ansprüche 1 bis 7, wobei an dem Entlastungskolben (3) eine Kolbenstange (8) befestigt ist, die stirnseitig aus einem Zylindergehäuse (7) der Druckzylindereinheit (2) heraussteht und Lagermittel (9) zum Anlenken der Kolbenstange (8) an einem Aufhängungsteil besitzt.

10. Entlastungs- und Aushubvorrichtung nach einem der vorhergehenden Ansprüche, wobei a.) die Entlastungskammer (4) durch einen Druckkanal (16) mit dem Entlastungsdruck (p_{E}) beaufschlagbar ist, wobei der genannte Druckkanal (16) durch die genannte Kammerwandung (14) hindurchführt und die Entlastungskammer (4) mit einem außenseitigen Druckanschluss (18) verbindet, und/oder b.) die Aushubkammer (6) über einen Druckkanal (19) mit dem Aushubdruck (p_{A}) beaufschlagbar ist, wobei der genannte Druckkanal (19) durch eine Stirnseitenwandung (15) geführt ist, welche die Aushubkammer (6) stirnseitig begrenzt und/oder eine Endstellung für den Aushubkolben (5) vorgibt.

11. Entlastungs- und Aushubvorrichtung nach einem der vorhergehenden Ansprüche, wobei eine zweite Druckzylindereinheit (10) zur Bereitstellung einer zweiten Aushubstufe vorgesehen und mit der Druckzylindereinheit (2), die die Entlastungs- und Aushubkolben (3, 5) umfasst, verbunden ist, insbesondere koaxial dazu angeordnet ist.

12. Entlastungs- und Aushubvorrichtung nach dem vorhergehenden Anspruch, wobei die zweite Druckzylindereinheit (10) zum Bereitstellen der zweiten Aushubstufe an dem Entlastungskolben (3) oder einer am Entlastungskolben (3) befestigten Kolbenstange (8) montiert oder befestigt ist, und/oder doppeltwirkend ausgebildet ist und zwei auf gegenüberliegenden Seiten eines Kolbens (24) angeordnete Druckkammern besitzt.

13. Entlastungs- und Aushubvorrichtung nach einem der vorhergehenden Ansprüche, wobei an die Entlastungskammer (4) ein Druckspeicher (21) zum Bereitstellen des Entlastungsdrucks (p_{E}) angeschlossen ist und die Aushubkammer (6) über eine Druckleitung (22) mit einem schlepperseitigen Druckversorgungssystem verbindbar ist, wobei ein Drucksteuergerät (23) zum Steuern des in die Aushubkammer (6) gegebenen Aushubdrucks (p_{A}) vorgesehen ist, wobei das genannte Drucksteuergerät (23) dazu ausgebildet ist, im Entlastungsbetrieb die Aushubkammer (6) drucklos und/oder in Schwimmstellung zu schalten und im Aushubbetrieb zum Ausheben des Arbeitsaggregats (28) mit dem Aushubdruck (p_{A}) zu beaufschlagen.

14. Landwirtschaftliche Arbeitsmaschine mit zumindest einem höhenbeweglich aufgehängten Arbeitsaggregat (28) sowie einer Entlastungs- und Aushubvorrichtung (1) zum Gewichtsentlasten und Ausheben des Arbeitsaggregats (28), wobei die genannte Entlastungs- und Aushubvorrichtung (1) gemäß einem der vorhergehenden Ansprüche ausgebildet ist.

15. Landwirtschaftliche Arbeitsmaschine nach dem vorhergehenden Anspruch, die
- als Mähmaschine ausgebildet ist und als Arbeitsaggregat (28) ein Mähwerk besitzt, oder
- als Ballenpresse oder Ladewagen ausgebildet ist und als Arbeitsaggregat (28) eine höhenbewegliche Pickup aufweist, oder
- als Heuwerbungsmaschine in Form eines Kreiselschwaders ausgebildet ist und als Arbeitsaggregat (28) einen Rechkreisel besitzt.
